# FASCICULE DE BREVET EUROPEEN

(11) **EP 1 106 670 B1**
(45) Date de publication et mention de la délivrance du brevet: **11.08.2004**
(21) Numéro de dépôt: 00440312.7
(22) Date de dépôt: 29.11.2000
(51) Int. Cl.: C09K 17/26, C09K 17/48, C09K 17/18, E21D 9/00

(54) **Produit à base de résine phénolique présentant des caractéristiques de flexibilité améliorées voisines des polyuréthannes expansés, destiné à l'injection pour la consolidation des terrains**
Produkt auf Basis von Phenolharzen mit verbesserter Flexibilität gleichartig wie geschäumten Polyurethanen , zur Injektion und Bodenverfestigung
Product based on phenolic resin with improved flexibility characteristics similar to those of foamed polyurethanes , for injection and soil consolidation

(30) Priorité: 30.11.1999 FR 9915112
(43) Date de publication de la demande: 13.06.2001
(73) Titulaire: A. WEBER, S.A., F-57520 Rouhling (FR)
(72) Inventeur: Weber, Franck, 57520 Rouhling (FR)
(74) Mandataire: Nuss, Pierre

(56) Documents cités:
- EP-A- 0 629 655
- EP-A- 0 934 994
- FR-A- 2 484 529

## Description

La présente invention a pour objet un produit à base de résine phénolique présentant des caractéristiques de flexibilité améliorées voisines des polyuréthannes expansés, c'est-à-dire ne présentant pas de rupture nette au collage, même sept jours après son application.

L'invention concerne, en particulier, le domaine de la consolidation de terrains en exploitation minière et dans les travaux publics.

Les caractéristiques de ces produits de consolidation sont évaluées par des tests en flexion sur des éprouvettes de section carrée, collées entre elles par un produit polymérisé de 3 mm d'épaisseur. Les valeurs de collage et le déplacement sont mesurés dans le temps et les résultats sont exploités sur une courbe par comparaison avec les caractéristiques de produits réputés comme souples, tels les polyuréthannes.

L'aspect de cette courbe est une courbe en forme de cloche, qui permet de bien caractériser la souplesse. Une telle courbe, représentée ci-dessous, met en évidence, en abscisse, le déplacement du mors de flexion et, en ordonnée, la force appliquée ou la résistance au collage calculée.

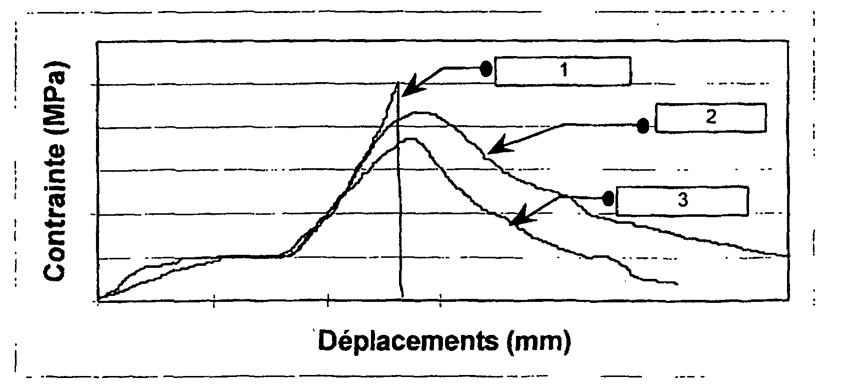

Actuellement, dans le cadre de l'exploitation minière et notamment de celle du charbon, il est couramment fait appel, dans la formulation de produits de consolidation ou d'étanchement, à des produits organiques parmi lesquels figurent en particulier les résines phénoliques. La plupart de ces produits permettent, certes, de satisfaire à leur objectif essentiel, mais présentent tous l'inconvénient soit d'un collage insuffisant, soit d'être cassants après polymérisation, soit d'être inflammables ou encore présentent des températures de réactions pouvant être plus élevées que les températures d'auto-inflammmation du charbon.

On connaît ainsi, d'après FR-A-2 774 384 ou EP-A-0 934 994 correspondant, des produits bi-composants résol et catalyseur à base d'acides sulfoniques, additionnés de polyesters linéaires et d'un condensat résorcine formol, qui sont ininflammables et à basse température de réaction. Ces produits, qui polymérisent à une température inférieure à 100°C, permettent, certes, de gagner en flexibilité, mais présentent, cependant, après polymérisation, l'inconvénient de céder rapidement à un effort de flexion par une rupture nette, au-delà d'un certain temps de polymérisation. Cette rupture nette apparaît clairement sur la courbe 1, représentée plus haut, relative à un produit selon l'état de la technique.

En effet, tous les produits à base de résine phénolique connus jusqu'à ce jour, bien qu'étant souples et flexibles juste après leur polymérisation et conservant une stabilité dans le temps font apparaître, par la mesure mécanique de la flèche, que la caractéristique en matière de flexibilité recherchée, soit une courbe en forme de cloche, n'est pas conservée.

Par ailleurs, on connaît, par FR-A-2 484 529, un produit bi-composant servant de base à la chimie des phénoliques, qui est une résine formophénolique additionnée de trichlorotrifluoroéthane comme agent gonflant. Un tel produit permet l'obtention d'une mousse phénolique ininflammable, mais ne présentant aucune caractéristique de flexibilité durable.

La présente invention a pour but de pallier ces inconvénients en proposant un produit à base de résine phénolique, destiné à la consolidation des terrains, ce produit étant mis en oeuvre par injection et présentant des caractéristiques de flexibilité améliorées voisines des polyuréthannes expansés et dont le test de flexion révèle une courbe en cloche sans rupture nette de collage, même après une période de plusieurs jours. La courbe de flexibilité correspondante 3 est représentée plus haut et peut être comparée à celle, 2, d'un polyuréthanne.

A cet effet, le produit, qui est un bi-composant comportant une résine à base d'un résol et un catalyseur à base d'acide sulfonique, est caractérisé en ce qu'il comporte comme additifs un tensio-actif ou une combinaison de tensio-actifs, de la résorcine, une résine novolaque ou une résine novolaque sulfonée et/ou une dispersion de résol préalablement réticulé, ces additifs étant invariablement rajoutés au composant résine ou au composant catalyseur.

Par réaction avec l'acide sulfonique du catalyseur et avec le résol de la résine, ces différents additifs permettent la formation de groupements susceptibles de former un réseau tridimensionnel avec le résol de la résine.

Selon une caractéristique de l'invention, le ou les tensio-actifs sont ajoutés en quantité importante dans la partie résine et/ou dans la partie catalyseur. Il en résulte que, lors de la polymérisation en couche mince, le produit conforme à l'invention présente une excellente adhésion au support, un indice de mouillabilité élevé, ainsi que des caractéristiques de flexibilité maintenues sur une longue durée.

Les types de tensio-actifs pouvant être utilisés sont les types généralement connus dans l'industrie, et plus particulièrement les tensio-actifs non-ioniques. A cet effet, parmi les tensio-actifs non ioniques, les plus efficaces sont les alcools gras polyéthoxylés, pris seuls ou en combinaison entre eux ou avec des produits tels que les polyols, les polyesters, etc.. Ces tensio-actifs peuvent être indifféremment ajoutés dans la partie résine ou dans la partie catalyseur en fonction des caractéristiques désirées.

Le résol utilisé dans la partie résine peut, soit être un résol résultant uniquement d'une condensation du formol sur le phénol en milieu basique, soit être un résol résultant d'une condensation entre des phénols substitués, tels que les alkyls phénols, les crésols, le xylénol, et le formol ou ses dérivés.

Selon une autre caractéristiques de l'invention, le composant résine peut être pourvu d'un additif tel qu'un organo-silane destiné à favoriser l'adhésion, en particulier sur tout support minéral, ou tel qu'un alcool furfurylique, qui permet d'augmenter, si nécessaire, la réactivité du mélange, de sorte que le mélange final de produit collant peut être parfaitement adapté aux conditions d'application.

Il est également possible d'obtenir une expansion du produit par moussage mécanique, par adjonction d'air ou de gaz, ou chimique, par addition au composant résine d'un agent porogène dégageant un gaz par réaction avec un milieu acide, tel que, par exemple, du bicarbonate de sodium. Le complexe alvéolaire ainsi formé est stabilisé par le ou les tensio-actifs présents dans le composant résine ou dans le composant catalyseur.

Le produit à base de résine phénolique conforme à l'invention présente la composition suivante :

| | |
|---|---|
| Résol | de 10 % à 50 %, de préférence 25 % |
| Acide sulfonique | de 10 % à 50 %, de préférence 25 % |
| Tensio-actif | de 5 % à 40 %, de préférence 25 % |
| Novolaque, novolaque sulfonée ou dispersion de résol dans un excès d'acide sulfonique | de 5 % à 40 %, de préférence 17,5 % |
| Résorcine | de 1 % à 15 %, de préférence 7,5 % |

A titre d'exemple préférentiel, le produit selon l'invention se présentera sous forme d'un produit bi-composant comportant :
- une partie résine se composant de

| | |
|---|---|
| Résol | 50 % |
| Tensio-actifs | 50 % |

- une partie catalyseur se composant de

| | |
|---|---|
| Acide sulfonique et, de préférence, acide phénolsulfonique | 50 % |
| Novolaque sulfonée obtenue par sulfonation d'une résine novolaque ou par polycondensation d'acide phénolsulfonique et de formol ou de paraformaldéhyde | 35 % |
| Résorcine | 15 % |

En variante, le produit peut également se présenter sous forme d'un produit bi-composant comportant :
- une partie résine se composant de

| | |
|---|---|
| Résol | 50 % |
| Tensio-actifs | 50 % |

- une partie catalyseur se composant de

| | |
|---|---|
| Acide sulfonique et, de préférence, acide phénolsulfonique | 50 % |
| Mélange résol/acide sulfonique réticulé dispersible dans le milieu | 35 % |
| Résorcine | 15 % |

Les composants résine et catalyseurs peuvent être mis en oeuvre dans un rapport compris entre 1 :4 et 4 :1 et, de préférence, dans un rapport de 1/1.

Le produit, objet de la présente invention, est destiné à être utilisé plus particulièrement dans le domaine de l'exploitation minière et des travaux publics pour la consolidation des terrains ou du charbon et l'étanchement à l'air et au gaz, notamment par injection.

En outre, le produit conforme à l'invention présente une faible température de réaction, une bonne capacité de collage et une ininflammabilité particulièrement intéressante pour ce qui est de la sécurité.

Bien entendu, l'invention n'est pas limitée au mode de réalisation décrit. Des modifications restent possibles, notamment du point de vue de la composition des composantes du produit ou par substitution d'équivalents techniques ou chimiques, sans sortir pour autant du domaine de protection de l'invention.

## Revendications

1. Produit bi-composant à base de résine phénolique, comportant une résine à base d'un résol et un catalyseur à base d'acide sulfonique, destiné à l'injection pour la consolidation des terrains, présentant des caractéristiques de flexibilité améliorées voisines des polyuréthannes expansés et dont le test de flexion révèle une courbe en cloche sans rupture nette de collage, même après une période de plusieurs jours, **caractérisé en ce qu'**il comporte comme additifs un tensio-actif ou une combinaison de tensio-actifs, de la résorcine, une résine novolaque ou une résine novolaque sulfonée et/ou une dispersion de résol préalablement réticulé, ces additifs étant invariablement rajoutés au composant résine ou au composant catalyseur.

2. Produit suivant la revendication 1 **caractérisé en ce que** le ou les tensio-actifs sont ajoutés en quantité importante dans la partie résine et/ou dans la partie catalyseur.

3. Produit suivant la revendication 2 **caractérisé en ce que** les tensio-actifs sont les tensio-actifs non-ioniques.

4. Produit suivant l'une quelconque des revendications 2 et 3 **caractérisé en ce que** les tensio-actifs sont les alcools gras polyéthoxylés, pris seuls ou en combinaison entre eux ou avec des produits tels que les polyols, les polyesters, etc..

5. Produit suivant la revendication 1 **caractérisé en ce que** le résol utilisé dans la partie résine est, soit un résol résultant uniquement d'une condensation du formol sur le phénol en milieu basique, soit un résol résultant d'une condensation entre des phénols substitués, tels que les alkyls phénols, les crésols, le xylénol, et le formol ou ses dérivés.

6. Produit suivant la revendication 1 **caractérisé en ce que** le composant résine est pourvu d'un additif tel qu'un organo-silane ou tel qu'un alcool furfurylique.

7. Produit suivant la revendication 1 **caractérisé en ce que** le composant résine est additionné d'un agent porogène, tel que du bicarbonate de sodium.

8. Produit suivant l'une quelconque des revendications 1 à 7 **caractérisé en ce qu'**il présente la composition suivante :
| | |
|---|---|
| Résol | de 10 % à 50 %, de préférence 25 % |
| Acide sulfonique | de 10 % à 50 %, de préférence 25 % |
| Tensio-actif | de 5 % à 40 %, de préférence 25 % |
| Novolaque, novolaque sulfonée ou dispersion de résol dans un excès d'acide sulfonique | de 5 % à 40 %, de préférence 17,5 % |
| | |
| Résorcine | de 1 % à 15 %, de préférence 7,5 % |

9. Produit suivant l'une quelconque des revendications 1 à 7. **caractérisé en ce qu'**il se présente sous forme d'un produit bi-composant comportant :
- une partie résine se composant de :
| | |
|---|---|
| Résol | 50 % |
| Tensio-actifs | 50 % |
- une partie catalyseur se composant de :
| | |
|---|---|
| Acide sulfonique et, de préférence, acide phénolsulfonique | 50 % |
| Novolaque sulfonée obtenue par sulfonation d'une résine novolaque ou par polycondensation d'acide phénolsulfonique et de formol ou de paraformaldéhyde | 35 % |
| Résorcine | 15 % |

10. Produit suivant l'une quelconque des revendications 1 à 7, **caractérisé en ce qu'**il se présente sous forme d'un produit bi-composant comportant :
- une partie résine se composant de
| | |
|---|---|
| Résol | 50 % |
| Tensio-actifs | 50 % |
- une partie catalyseur se composant de
| | |
|---|---|
| Acide sulfonique et, de préférence, acide phénolsulfonique | 50 % |
| Mélange résol/acide sulfonique réticulé dispersible dans le milieu | 35 % |
| Résorcine | 15 % |

11. Produit suivant l'une quelconque des revendications 9 et 10, **caractérisé en ce que** les composants résine et catalyseur sont mis en oeuvre dans un rapport compris entre 1 :4 et 4 :1 et, de préférence, dans un rapport de 1/1.

## Patentansprüche

1. Zweikomponentenprodukt auf Phenolharzbasis, bestehend aus einem Harz auf Basis eines Resols und einem Katalysator auf Basis von Sulfonsäure, für die Einspritzung von Erdreich zwecks Verfestigung, mit verbesserten Biegeeigenschaften ähnlich wie Polyurethanschaum und dessen Biegetest eine glockenförmige Kurve ergibt ohne deutlichen Bruch der Klebung, auch nach einer Dauer von mehreren Tagen nicht, **gekennzeichnet dadurch, dass** es als Additiv ein Tensid oder eine Tensid-Kombination, Resorcin, ein Novolak-Harz oder ein sulfodiertes Novolak-Harz und/oder eine vorab vemetzte Resollösung enthält, wobei diese Additive unveränderbar der Harzkomponente oder der Katalysatorkomponente beigefügt werden können.

2. Produkt nach Anspruch 1, **dadurch gekennzeichnet, dass** das oder die Tenside in erheblichen Mengen dem Harzteil und/oder dem Katalysatorteil zugefügt werden.

3. Produkt nach Anspruch 2, **dadurch gekennzeichnet, dass** es sich bei den Tensiden um nichtionische Tenside handelt.

4. Produkt nach einem der Ansprüche 2 und 3, **dadurch gekennzeichnet, dass** es sich bei den Tensiden um Alkylethoxylate handelt, die allein oder in Verbindung miteinander oder mit Produkten wie Polyol, Polyester usw., verwendet werden können.

5. Produkt nach Anspruch 1, **dadurch gekennzeichnet, dass** es sich bei dem im Harzteil verwendeten Resol entweder um ein Resol handelt, das einzig aus der Kondensation von Formalin mit Phenol im basischen Bereich entsteht, oder um ein Resol, das aus der Kondensation von Phenolhomologen, wie Alkylphenole, Cresole, Xylenol und Formalin oder deren Ableitungen, entsteht.

6. Produkt nach Anspruch 1, **dadurch gekennzeichnet, dass** die Harzkomponente mit einem Additiv versetzt wird, wie organischem Silan oder Furfurylalkohol.

7. Produkt nach Anspruch 1, **dadurch gekennzeichnet, dass** der Harzkomponente ein Treibmittel hinzugefügt wird, wie z.B. Natriumbikarbonat.

8. Produkt nach einem der Ansprüche 1 bis 7, **dadurch gekennzeichnet, dass** es folgende Zusammensetzung aufweist:
| | | |
|---|---|---|
| Resol | von 10 % bis 50 % | vorzugsweise 25 % |
| Sulfonsäure | von 10 % bis 50 % | vorzugsweise 25 % |
| Tensid | von 5 % bis 40 % | vorzugsweise 25 % |
| Novolak, Sulfonnovolak oder Resollösung in einem Überschuss an Sulfonsäure | von 5 % bis 40 % | vorzugsweise 17,5 % |
| Resorcin | von 1 % bis 15 % | vorzugsweise 7,5 % |

9. Produkt nach einem der Ansprüche 1 bis 7, **dadurch gekennzeichnet, dass** es sich in Form eines Zweikomponenten-Produkts wie folgt zusammensetzt:
- ein Harzteil, bestehend aus:
| | |
|---|---|
| Resol | 50 % |
| Tenside | 50 % |
- ein Katalysatorteil, bestehend aus: ä
| | |
|---|---|
| Sulfonsäure und, vorzugsweise, Phenolsulfonsäure | 50 % |
| Sulfodierter Novolak, erhalten durch Sulfurierung eines Novolak-Harzes oder durch Polykondensation einer Phenolsulfonsäure und Formalin oder Paraformaldehyd | 35 % |
| Resorcin | 15 % |

10. Produkt nach einem der Ansprüche 1 bis 7, **dadurch gekennzeichnet, dass** es sich in Form eines Zweikomponenten-Produkts wie folgt zusammensetzt:
- ein Harzteil, bestehend aus:
| | |
|---|---|
| Resol | 50 % |
| Tenside | 50 % |
- ein Katalysatorteil, bestehend aus:
| | |
|---|---|
| Sulfonsäure und, vorzugsweise, Phenolsulfonsäure | 50 % |
| Gemisch aus Resol/vernetzter Sulfonsäure dispergierbar in dem Medium | 35 % |
| Resorcin | 15 % |

11. Produkt nach einem der Ansprüche 9 und 10, **dadurch gekennzeichnet, dass** die Harz- und Katalysatorkomponenten in einem Verhältnis von 1:4 bis 4:1 eingesetzt werden und vorzugsweise in einem Verhältnis von 1:1.

## Claims

1. Phenolic resin-based bi-component product comprising a resol-based resin and a sulphonic acid-based catalyst, intended for injection and soil consolidation, having improved flexibility characteristics similar to those of expanded polyurethanes, the bending test of which reveals a bell-shaped curve without a clean break of adhesion, even after a period of several days, **characterised in that** the additives that it comprises are a surfactant or a combination of surfactants, resorcinol, a novolak resin or a sulphonated novolak resin and/or a dispersion of previously cross-linked resol, these additives being invariably added to the resin component or to the catalyst component.

2. Product according to claim 1, **characterised in that** the surfactant or surfactants are added in a significant quantity, in the resin part and/or in the catalyst part.

3. Product according to claim 2, **characterised in that** the surfactants are non-ionic surfactants.

4. Product according to any one of claims 2 and 3, **characterised in that** the surfactants are polyethoxylated fatty alcohols, taken individually or in combination with one another, or with products such as polyols, polyesters, etc.

5. Product according to claim 1, **characterised in that** the resol used in the resin part is either a resol resulting solely from condensation of formol on phenol in a base medium, or a resol resulting from condensation between substituted phenols, such as alkyl phenols, cresols, xylenol, and formol or their derivatives.

6. Product according to claim 1, **characterised in that** the resin component is provided with an additive, such as an organosilane or a furfuryl alcohol.

7. Product according to claim 1, **characterised in that** an expanding agent is added to the resin component, such as sodium bicarbonate.

8. Product according to any one of claims 1 to 7, **characterised in that** it has the following composition:
| | |
|---|---|
| resol | from 10 % to 50 %, preferably 25 % |
| sulphonic acid | from 10 % to 50 %, preferably 25 % |
| surfactant | from 5 % to 40 %, preferably 25 % |
| novolak, sulphonated novolak or dispersion of resol in an excess of acid sulphonic | from 5 % to 40 %, preferably 17.5% |
| resorcinol | from 1 % to 15 %, preferably 7.5 % |

9. Product according to any one of claims 1 to 7, **characterised in that** it is in the form of a bi-component product comprising:
- a resin part composed of:
| | |
|---|---|
| resol | 50 % |
| surfactants | 50 % |
- a catalyst composed of:
| | |
|---|---|
| sulphonic acid, and preferably phenolsulphonic acid | 50 % |
| sulphonated novolak obtained by the sulphonation of a novolak resin, or by polycondensation of phenolsulphonic acid and formol or paraformaldehyde | 35 % |
| resorcinol | 15 % |

10. Product according to any one of claims 1 to 7, **characterised in that** it is in the form of a bi-component product comprising:
- a resin part composed of
| | |
|---|---|
| resol | 50 % |
| surfactants | 50 % |
- a catalyst part composed of:
| | |
|---|---|
| sulphonic acid, and preferably phenolsulphonic acid | 50 % |
| mixture of resol/cross-linked sulphonic acid that is dispersible in the medium | 35 % |
| resorcinol | 15 % |

11. Product according to any one of claims 9 and 10, **characterised in that** the resin and catalyst components are used in a ratio of between 1:4 and 4:1, and preferably in a ratio of 1/1.
